# EUROPEAN PATENT APPLICATION

(11) **EP 2 051 453 A1**
(43) Date of publication of application: **22.04.2009**
(21) Application number: 07020242.9
(22) Date of filing: 16.10.2007
(51) Int. Cl.: H04L 12/56

(54) **Method for providing redundancy in a data transmission network**

(71) Applicant: Nokia Siemens Networks Oy, 02610 Espoo (FI)
(72) Inventor: Gruber, Claus, 80336 München (DE); Rambach, Franz, 81927 München (DE); Schupke, Dominic, 80339 München (DE)
(74) Representative: Bruglachner, Thomas E.

(57) **Abstract**

Described is a method comprising:
- providing a first data transmission path (P1) from a first network element (AR1a) of a first network (22a) via a second network (20a),
- providing a second data transmission path (P2) from the first network element (AR1a) via the second network (20a),
- using in the first data transmission path (P1) and in the second network (20a), a second network element (CR1a) that processes data packets based on a first method using a first type of identifiers of data packets,
- using in the second data transmission path (P2) and in the second network (20a), a third network element (MDa1a) that does not use identifiers of data packets for processing or that uses a second type of identifiers of data packets for processing whereby the second type is different from the first type.

## Description

The invention relates to a data transmission network comprising:
- providing a first data transmission path from a first network element of a first network via a second network,
- providing a second data transmission path from the first network element via the second network,
- using in the first data transmission path and in the second network, a second network element that processes data packets based on a first method using a first type of identifiers of data packets,
- using in the second data transmission path and in the second network, a third network element.

The network elements may be switches or routers or other network elements. The first network element may be connected to the second network element and to the third network element for reasons of redundancy, load balancing or other reasons. A network element may be arranged at a network node, i.e., at a place where several links of the network are connected with each other. The links may be lines, for instance electrical or optical lines, radio frequency transmission links or other kinds of links.

To describe the functions of network elements, a layer model of data protocol stack may be used. One kind of model is the OSI-model (Open Systems Interconnection), see for instance ITU-T (International Telecommunication Union - Telecommunication standardization sector), X.200. By using such a model a switch can be regarded as a network layer 2 element that operates according to a layer 2 protocol, for instance according to the Ethernet protocol (IEEE (Institute of Electrical and Electronics Engineers) 802.3 or another protocol. A router may be regarded as a layer 3 element, that works according to a layer 3 protocol, for instance according to the IP protocol (Internet Protocol), see for instance RFC 2460 (IPv6, IP Version 6).

Network data may be speech data, especially telephone data, picture data, program data, etc. Network data are typically transmitted in data packets that contain a destination address and a source address. Alternatively, a path identifier may be included in a data packet.

Data packets typically comprise payload data and address data, for instance at least one of the following identifier types:
- an IP (Internet Protocol) address,
- a MAC (Medium ACcess) address,
- a VLAN (Virtual Local Area Network) identifier,
- an MPLS (Multi Protocol Label Switching) label, etc.

Processing of data packets may comprise for the second network element a routing decision or switching decision based on the identifiers.

The first network may be an access network, i.e., a network that is used to link a plurality of user devices to a further network, for instance, to the Internet. The access network may comprise a metropolitan network. The second network may be a core network, for instance the network of an ISP (Internet Service Provider). The types of both networks may be different from each other.

If the third network element is out of operation, for instance because there is a failure, a power loss, etc., data can be transmitted from the first network element via the second network element and vice versa. Otherwise, data can be transmitted from the first network element via the third network element if the second network element is out of operation. The data are forwarded via the second network to a destination site.

There may typically be at least two access network elements linked to a core network element. Furthermore, two core network elements may be used per site for redundancy reasons.

However, there are high CAPEX (CAPital EXpenditure) involved if the second network element and the third network element are of the same type, for instance both network elements are routers or both network elements are switches.

It is an object of the invention to provide a simple method, especially for a network that comprises redundant network elements. Furthermore, a network should be given, especially for performing the method.

This object is solved by the network of claim 1. Embodiments are given in the subclaims.

A Method is given that may provide in addition to the features mentioned at the beginning:
- using in the second data transmission path and in the second network, a third network element that does not use identifiers of data packets for processing or that uses a second type of identifiers of data packets for processing whereby the second type is different from the first type.

Thus, the third network element processes data based on a second method that is different from the first method. The first method may relate to the highest processed protocol layer in the second network element. The second method may likewise relate to the highest processed protocol layer in the third network element.

The second type of identifiers may have a different position in the data packets compared with the position of the first type of identifiers.

The third network element may process data packets by using no identifiers of received data packets, for instance by:
- time multiplexing using fixed time slots,
- using more than one input link and only one output link, i.e., all data is forwarded to the same output independent of the input link,
- considering only port numbers.

The third network element may process data packets considering identifiers, for instance by:
- multiplexing data packets to data containers, for instance SDH (Synchronous Digital Hierarchy) containers,
- layer 2 switching.

The processing of data packets by the third network element may comprise, for instance:
- forwarding, i.e., processing without a decision depending on identifiers of data packets,
- switching based on a switching decision depending on identifiers of data packets.

Thus the third network element is simpler than the second network element. This saves CAPEX.

There may be one of the following cases:
a) the first network element comprises a router, the second network element comprises a router and the third network element comprises a multiplexer, or
b) the first network element comprises a router, the second network element comprises a router and the third network element comprises a switch, or
c) the first network element comprises a switch, the second network element comprises a switch and the third network element comprises a multiplexer.

Thus the method may be used in different types of networks, for instance IP/MPLS, Ethernet etc.

The first network element, the second network element and the third network element may be located at a first site. A site is a locally limited area, for instance a town, a district, a part of a town or a part of a district. A site may be a PoP (Point of Presence).

In the second data path and in the second network, a forth network element may be used that is linked to the third network element and that does not use identifiers of data packets for processing of data packets or uses the second type of identifiers of data packets for processing of data packets. Furthermore, in the second data path and in the second network, a fifth network element may be used that is linked to the forth network element and that forwards data based on the first method.

This means that, for case:
a) the forth network element is a multiplexer and the fifth network element is a router,
b) the forth network element is a switch and the fifth network element is a router, and
c) the forth network element is a multiplexer and the fifth network element is a switch.

Thus, the forth network element is the communication partner of the third network element. The fifth network element may have the same type as the second network element, i.e., it is a network element for a higher protocol layer than the protocol layer that is processed by the third network element and by the forth network element. Therefore, the fifth network element may perform more sophisticated data distribution. Thus the fifth network element may be a redundant network element with regard to the second network element.

The forth network element and the fifth network element may be located at a second site that is different from the first site. The second site may only be reachable by using the second network. The second site is typically at a larger distance from the first site. Alternatively, both sites may be adjacent with regard to each other.

In the first data path and in the second network, a sixth network element may be used that is linked to the second network element and that processes data based packets on the first method.

There may be the following constellations, for case:
a) the sixth network element is a router,
b) the sixth network element is router, and
c) the sixth network element is a switch.

The sixth network element is the communication partner of the second network element and may work on a higher protocol layer compared to the third network element or the forth network element.

The sixth network element may be located at the second site or at a third site that is different from the first site and from the second site. If more than one network plane is used it is preferred to arrange the sixth network element at the third site.

A first link may be used between the first network element and the second network element. A second link may be used between the first network element and the third network element. These links may be direct links, i.e., links without intermediate network elements.

In the first network, a seventh network element may be used that is linked to the second network element and to the third network element.

There may be the following constellations, for case:
a) the seventh network element is a router,
b) the seventh network element is a router, and
c) the seventh network element is a switch.

The first network element, the second network element and the third network element may be located in the same building, or in the same room. Alternatively, different buildings may be used that are located closely together, for instance with distances shorter than 100 meter.

In the first path and in the second path and in a third network, an eighth network element may be used that is linked to the fifth network element and to the sixth network element. Thus, the first network element may be the starting point of both paths and the eighth network element may be the end point of both paths or vice versa.

The eighth network element may have the same element type as the fifth network element and the sixth network element.

The eighth network element may be located at the same site as fifth network element, i.e., at the second site.

In the third network, a ninth network element may be used that is linked to the fifth network element and to the sixth network element. The ninth network element may be of the same element type as the fifth network element and the sixth network element. The ninth network element may be located at the same site as the fifth network element, i.e., at the second site. The fifth network element, the sixth network element, the eighth network element and the ninth network element may form a typical redundant network element group.

The second network element may be part of a first network plane. The third network element may be part of a second network plane. The first network plane and the second network plane may form redundant planes with regard to each other. Only two network planes are typically used to save costs but to allow redundancy. Alternatively, only one network plane may be used. The network planes are used, for instance, to circumvent the disadvantages of network elements of one manufacturer by using the advantages of the network elements of another manufacturer.

The first data transmission path and the second data transmission path may be redundant data transmission paths with regard to each other. "Redundant" means for example that the first data transmission path and the second data transmission path have the first network element at its beginning and a common network element at its ends or they have a common network element at its beginning and the first network element at its ends. Thus, is one data transmission path fails the other data transmission path may be used. It is of course possible to use both redundant data path simultaneously if there is no failure in these paths, for instance for load balancing or for other purposes.

There may be a third data transmission path from the first network element via the second network. The third data transmission path may be different from the second data transmission path. The third data transmission path may be a redundant data path with regard to at least one or both of the first data transmission path and the second data transmission path. Thus, it is possible to use the first data transmission path in failure free operation but not the second data transmission path and the third data transmission path. If the first transmission path cannot be used, it is possible to distribute the incoming data flow to the second data transmission path and to the third data transmission path. This distribution enables it to use smaller backup or redundant elements compared with the case where no distribution will be used. The data flow may also be distributed to more than two redundant elements.

A further network element may be used in the third data transmission path and in the second network, for instance a multiplexer, especially a multiplexer comprising a transponder, i.e., a muxponder. The further network element may not be placed in the second data transmission path. The further network element may not use identifiers of data packets for processing or may use the second type of identifiers of data packets for processing. Thus the further network element is similar to the third network element.

Alternatively, the third network element may also be arranged in the third data transmission path. Thus, the third network element may be arranged in the second data transmission path and in the third data transmission path. The third network element may be a switch, for instance. There may be a significant cost reduction because the third network element may be arranged in more than one data transmission path.

The second data transmission path and the third data transmission path may be used simultaneously with regard to each other, for instance for load balancing or for a well directed unbalanced load distribution.

The first data transmission path, the second data transmission path and the third data transmission path may also be used simultaneously with regard to each other. Load balancing may be used with regard to this three data transmission paths or a data distribution method may be used that results in unbalanced load or in a well specified unbalanced load via the first data transmission path, the second data transmission path and the third data transmission path.

There may be at least one redundant network element for the second network element. The at least one redundant network element may use also the first type of identifier for processing data packets and may be located at a different site compared with the site of the second network element. There may be a significant cost reduction compared with the case where only redundant network elements at the same site are used.

There may be used at least two redundant network elements for the second network element. Both redundant network elements may also use the first type of identifier for processing data packets. This may result in a further cost reduction, because the redundancy may be distributed to a plurality of sites, for instance if both redundant network elements are located at a different site compared with the site of the second network element.

In the data transmission network, there may be a third data transmission path and a forth data transmission path that is redundant with regard to the third data transmission path. In the third data transmission path and in the second network, a tenth network element may be used. An eleventh network element may be used in the forth data transmission path and in the second network. The tenth network element and the eleventh network element may both forward data using the same identifier type of data packets. Thus, the network is a hybrid network with regard to redundancy features. In at least one site the method according to the invention is used. In at least one other site, two redundant elements of the same type are used in the core network at the other site, for instance two core network routers or two core network switches.

A data transmission network is provided, comprising:
- a first network element of a first network,
- in a second network, a second network element linked to the first network element via a first link,
- in the second network, a third network element linked to the first network element via a second link,
- the second network element comprises a first transmitting unit that processes data packets based on a first method using a first type of identifiers of data packets,
- the third network element comprises a second transmitting unit that does not use identifiers of data packets for processing of data packets or that uses identifiers of a second type for processing of data packets whereby the second type is different from the first type.

This network may be used to perform the inventive method or embodiments thereof. Therefore, there are the same technical effects.

In the following, embodiments of the invention are described with reference to the Figures, wherein:
- Figure 1: illustrates a comparative equipment structure of a core IP over WDM network,
- Figure 2: illustrates the logical IP layer for the network shown in Figure 1,
- Figure 3: illustrates the equipment structure of an IP over WDM core network for a first example using two planes,
- Figure 4: illustrates the logical IP layer for the network shown in Figure 3,
- Figure 5: illustrates the equipment structure of an IP over WDM core network for a second example using two planes,
- Figure 6: illustrates an IP over WDM core network using only one plane,
- Figure 7: illustrates an IP over carrier Ethernet network,
- Figure 8: illustrates an Ethernet over WDM network,
- Figure 9: illustrates a metropolitan area network (metro net),
- Figure 10: illustrates a simplified network,
- Figure 11: illustrates a network with two redundant network elements in a second data path and in a third data path,
- Figure 12: illustrates a further network with two redundant network elements in a second data path and in a third data path, and
- Figure 13: illustrates embodiments of the network shown in Figure 11 or Figure 12.

The embodiments are only for illustrative purposes and do not restrict the scope of the invention. The same reference signs refer to the same technical features if not stated otherwise. As far as "may" is used in this application it means the possibility of doing so as well as the actual technical implementation.

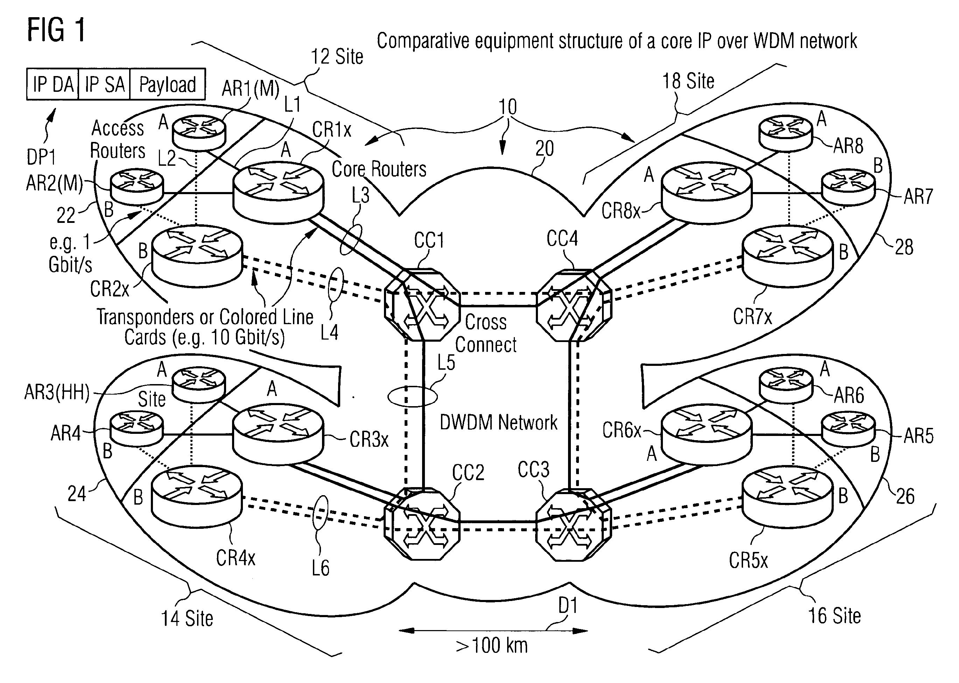

Figure 1 shows a network 10 for comparative purposes. Network 10 comprises:
- a site 12, i.e., a part of network 10 in a special geographical area, for instance, in Germany, Bavaria,
- a site 14, for instance a part of network 10 in another geographical area, e.g., Germany, area around Hamburg,
- a site 16, that comprises a part of network 10,
- a site 18, that comprises a further part of network 10, and
- a core network 20 that connects the sites 12 to 18.

Site 12 comprises:
- an access router AR1 of an access network 22, for instance in Germany, Munich,
- a redundant access router AR2 of access network 22, for instance also in Germany, Munich,
- a core router CR1x of core network 20, and
- a redundant core router CR2x of core network 20.

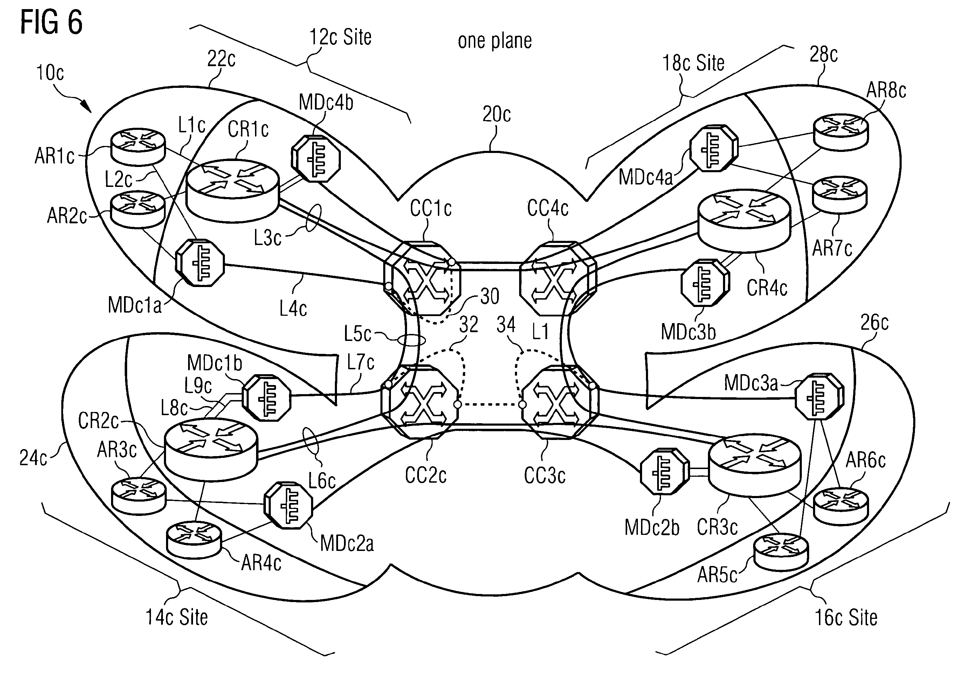

Core router CR1x belongs to a first network plane A and fulfills BRAS (Broadband Remote Access Server) functions, for instance. Core router CR2x belongs to another network plane B. In all Figures 1 to 9 that show networks with two network planes solid connection lines refer to network plane A and dashed or dotted lines refer to network plane B. In other embodiments both core routers CR1x and CR2x may belong to the same network plane, see for instance description of Figure 6 below.

Access router AR1 belongs to network plane A. Access router AR2 belongs to network plane B.

Access router AR1 is linked with core router CR1x via a link L1. Furthermore, access router AR1 is linked with core router CR2x via a link L2. Access router AR2 is linked to core router CR1x and to core router CR2x.

Site 14 comprises:
- an access router AR3 of an access network 24, for instance in Germany, Hamburg,
- a redundant access router AR4 of access network 24, for instance also in Germany, Hamburg,
- in core network 20, a core router CR3x that belongs to network plane A,
- in core network 20, a redundant (with regard to core router CR3x) core router CR4x that belongs to network plane B.

Access router AR3 belongs to network plane A and is linked to core router CR3x and to core router CR4x. Access router AR4 belongs to network plane B and is linked to core router CR3x and to core router CR4x for redundancy and/or load balancing reasons.

Site 16 comprises:
- an access router AR5 in an access network 26,
- a redundant access router AR6 in access network 26,
- in core network 20, a core router CR5x that belongs to network plane B, and
- in core network 20, a redundant core router CR6x that belongs to network plane A.

Access router AR5 belongs to network plane B and is linked or connected to core router CR5x and to core router CR6x. Access router AR6 belongs to network plane A is likewise connected to core router CR5x and to core router CR6x.

Site 18 comprises:
- an access router AR7 of an access network 28,
- a redundant access router AR8 of access network 28,
- in core network 20, a core router CR7x that belongs to network plane B, and
- in core network 20, a redundant core router CR8x that belongs to network plane A.

Core network 20 further comprises:
- an optical cross connect (device) CC1 that is used to connect site 12 to other parts of network 10,
- an optical cross connect CC2 that is used to connect site 14 with other parts of the network 10,
- an optical cross connect CC3 that is used to connect site 16 with other parts of network 10, and
- an optical cross connect CC4 that is used to connect site 18 with other parts of network 10.

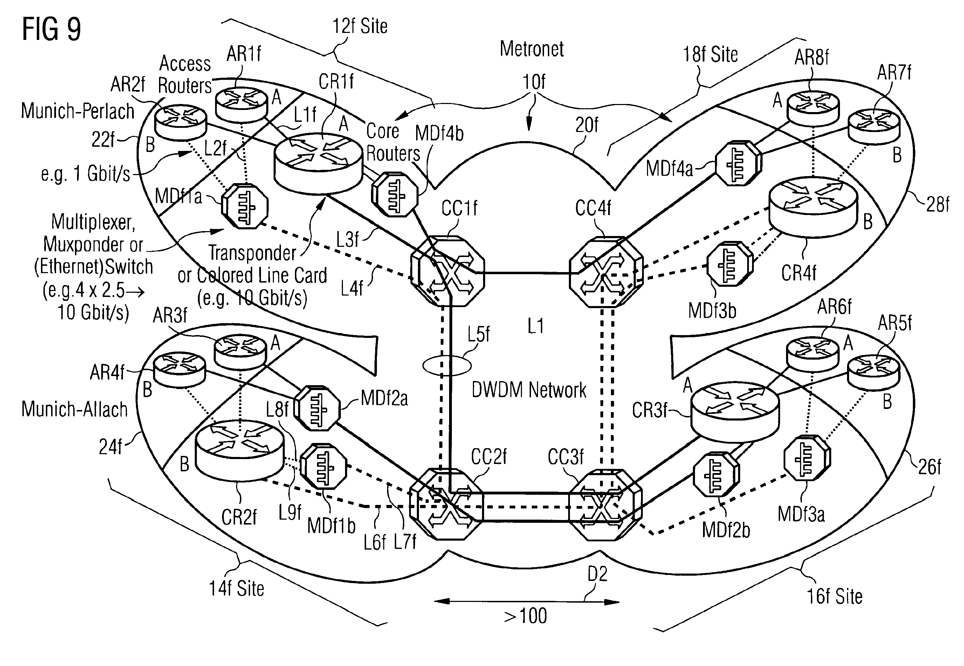

Access routers AR1 to AR8 and core routers CR1x to CR8x may be conventional routers, for instance Cisco routers CRS-1. Optical cross connects CC1 to CC4 may be cross connects produced by Nokia Siemens Networks, type Surpass hiT 7300 or hiT 7500. Alternatively cross connects of other companies may be used. In the embodiment, a distance D1 between two of the cross connects CC1 to CC4, especially between cross connect CC2 and cross connect CC3, is at least 100 kilometers or alternatively at least 500 kilometers. Therefore, network 10 is a long distance data transmission network, compared with smaller metro networks as shown in Figure 9.

Core router CR1x is linked to cross connect CC1 via a link L3. Core router CR2x is linked to cross connect CC1 via a link L4. These links L3 and L4 are optical links, for instance. Core router CR3x is linked to cross connect CC2 by an optical link. An optical link L6 is arranged between core router CR4x and cross connect CC2. At site 16, core router CR5x is optically linked to cross connect CC3. Core router CR6x is also optically linked to cross connect CC3. Core router CR7x of site 18 is connected via a link to cross connect CC4. Core router CR8x is linked to cross connect CC4 via a further optical link.

There are the following optical links between cross connects CC1 to CC4:
- a link L5 between cross connect CC1 and cross connect CC2,
- a link between cross connect CC2 and cross connect CC3,
- a further link between cross connect CC3 and cross connect CC4, and
- a link between cross connect CC4 and cross connect CC1.

Alternatively, further optical links may be there between cross connects CC1 to CC4. It is also possible that there are only direct optical links between some of the cross connects CC1 to CC4.

Between access routers AR1 to AR8 and core routers CR1x to CR8x Ethernet may be used, for instance, with a data transmission rate of 1 gigabit per second. Alternatively, other transmission protocols or other transmission rates may be used.

The following data flows may be provided for network plane A:
- a data flow between core router CR1x and core router CR3x via cross connect CC1 and cross connect CC2,
- a data flow between core router CR3x and core router CR6x via cross connect CC2 and cross connect CC3,
- a data flow between core router CR6x and core router CR8x via cross connect CC3 and cross connect CC4, and
- a data flow between core router CR8x and core router CR1x via cross connect CC1 and cross connect CC4.

The following data flows may be provided for network plane B:
- a data flow between core router CR2x and core router CR4x via cross connect CC1 and cross connect CC2,
- a data flow between core router CR4x and core router CR5x via cross connect CC2 and cross connect CC3,
- a data flow between core router CR6x and core router CR7x via cross connect CC3 and cross connect CC4, and
- a data flow between core router CR7x and core router CR2x via cross connect CC4 and cross connect CC1.

Alternatively or additionally, other data flows may be used between core routers CR1x to CR8x.

In the embodiment, core network 20 is a DWDM network (Dense Wavelength Division Multiplexing). The core network 20 is an optical network with regard to the sites 12 to 18, i.e., it is a layer 1 network whereas the sites 12 to 18 comprise layer 3 networks, for instance, IP networks. Core network 20 is also referred to as transport network.

It is possible to use transponders at the core network 20 side of core routers CR1x to CR8x. The transponders convert electrical signals into optical signals and vice versa. The data transmission rates at the transponders may be, for instance, 10 gigabit per second. Furthermore, transponders and line cards may output only one wavelength that may have a fixed frequency or may be tunable.

Figure 1 also shows a data packet DP1, for instance, an IP data packet. Data packet DP1 comprises:
- an IP destination address IP DA,
- an IP source address IP SA, and
- payload data.

It is assumed that data packet DP1 should be transmitted from access router AR1 to access router AR3. Therefore, the IP destination address IP DA of data packet DP1 contains the IP address of access router AR3. Source address IP SA of data packet DP1 contains the IP address of access router AR1.

By using, for instance MPLS (Multi Protocol Label Switching), data packet DP1 is routed from access router AR1 via core router CR1x and further via core router CR3x to access router AR3. Alternatively, there is the following path for data packet DP1: from access router AR1 via core router CR2x and via core router CR4x to access router AR3. The second path may be used for redundancy reasons or for load balancing reasons.

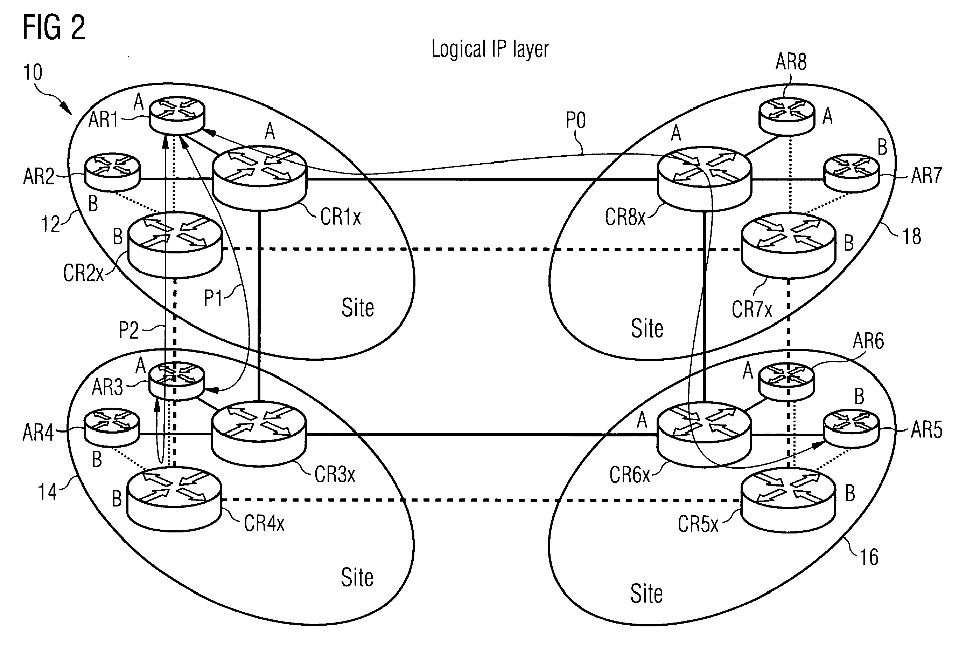

Figure 2 shows the logical IP layer view for network 10. The first path P1 from access router AR1 via core router CR1x and via core router CR3x to access router AR3 is shown there. Path P1 is a network plane A path. The alternative path P2 is also shown in Figure 2. Path P2 goes from access router AR1 via core router CR2x and via core router CR4x to access router AR3. Data path P2 is a path that uses network plane B.

Figure 2 also shows a data path P0 from access router AR1, via core router CR1x, core router CR8x and via core router CR6x to access router AR5. As shown in Figure 2 each path P0 to P2 includes at least two core routers CR1x to CR8x if the path connects access routers at different sites.

Core network 20 is not shown in Figure 2 because the core network 20 is transparent for higher protocol layers, especially for the IP layer.

Network 10 is redundant with regard to multiple failures, especially in different protocol layers, e.g. layer 2 or layer 3.

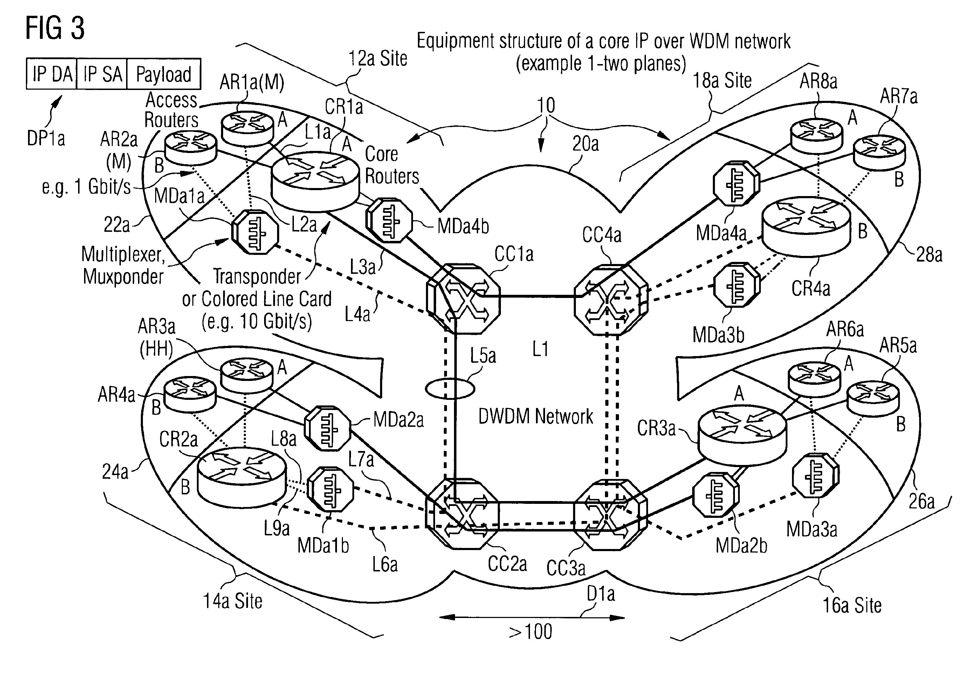

Figure 3 shows an equipment structure of an IP over WDM network 10a. There are the following corresponding features in Figure 1 and Figure 3:
- sites 12a to 18a correspond to sites 12 to 18, respectively, for instance site 12a corresponds to site 12,
- core network 20a corresponds to core network 20,
- access routers AR1a to AR8a correspond to access routers AR1 to AR8, respectively, for instance access router AR8a corresponds to access router AR8,
- core routers CR1a, CR2a, CR3a and CR4a correspond to core routers CR1x, CR4x, CR6x and CR7x, respectively, i.e., one core router is replaced at each site 12a to 18a by two multiplexers MDa1a to MDa4b as described in more detail below,
- cross connects CC1a to CC4a correspond to cross connects CC1 to CC4, respectively, and
- links L1a, L3a, L5a correspond to links L1, L3, L5, respectively.

Multiplexer MDa1a is located at site 12a. There is a link L2a between access router AR1a and multiplexer MDa1a. A further link is between access router AR2a and multiplexer MDa1a. These links may be Ethernet links with a data transmission rate of 1 gigabits per second, for instance. Multiplexer MDa1a also comprises a demultiplexer. Multiplexing is performed between access router side of multiplexer MDa1a and core network side of multiplexer MDa1a. Demultiplexing is performed from core network side of multiplexer MDa1a to access router side of multiplexer MDa1a. Multiplexer MDa1a is connected via a link L4a to cross connect CC1a. Therefore, multiplexer MDa1a also comprises a transponder that converts electrical signals into optical signals and vice versa. The multiplexer MDa1a may also be a muxponder (multiplexer transponder), i.e., it performs multiplexing and transponding.

Multiplexer MDa1a may perform:
- time multiplexing using transmission channels in time slots,
- multiplexing data in data containers.

Furthermore, there is a multiplexer MDa4b at site 12a. Multiplexer MDa4b is connected via two links to core router CR1a. Multiplexer MDa4b is also connected to cross connect CC1a. Both multiplexers MDa1a and MDa4b replace core router CR2x.

Site 14a comprises two multiplexers MDa1b and MDa2a instead of core router CR3x. Multiplexer MDa2a is connected to access router AR3a and access router AR4a. Multiplexer MDa2a is connected to cross connect CC2a via a further link. Multiplexer MDa1b is connected to core router CR2a via two links L8a and L9a. Furthermore, multiplexer MDa1b is connected to cross connect CC2a via a link L7a. A link L6a is between cross connect CC2a and core router CR2a.

Site 16a comprises two multiplexers MDa2b and Mda3a instead of core router CR5x. Multiplexer MDa3a is connected to access router AR5a and to access router AR6a via two links. Multiplexer MDa2b is connected via two links to core router CR3a. Furthermore, there is a link between cross connect CC3a and multiplexer MDa3a. A further link is between cross connect CC3a and multiplexer MDa2b.

Site 18a comprises two multiplexers MDa4a and MDa3b instead of core router CR8x. Multiplexer MDa4a is connected to access routers AR8a and AR7a. Furthermore, there is a link between multiplexer MDa4a and cross connect CC4a. Multiplexer MDa3b is connected to core router CR4a via two links. Furthermore, multiplexer MDa3b is connected to cross connect CC4a via a further link.

All multiplexers MDa1a to MDa4b also comprise demultiplexer units..

The following data flows are provided for network 10a network plane A:
- a data flow from core router CR1a via cross connects CC1a, CC2a and CC3a to core router CR3a,
- a data flow between multiplexer MDa2a via cross connects CC2a and CC3a to multiplexer MDa2b,
- a data flow between multiplexer MDa4a and multiplexer MDa4b via cross connects CC1a and CC4a.

The following data flows are provided for network 10a network plane B:
- a data flow between multiplexer MDa1a and multiplexer MDa1b via cross connects CC1a and CC2a,
- a data flow between core router CR2a and core router CR4a via cross connects CC2a, CC3a and CC4a,
- a data flow between multiplexer MDa3a and multiplexer MDa3b via cross connects CC3a and CC4a.
A data packet DP1a corresponds to data packet DP1, i.e., it has the following data fields:
- destination address IP DA,
- source address IP SA, and
- payload.

It is assumed that data packet DP1a should be routed from access router AR1a to access router AR3a. Therefore, destination address field IP DA comprises the IP address of access router AR3a. Source address field IP SA comprises the IP address of access router AR1a. According to a routing protocol, for instance OSPF or IS-IS, it is assumed that during a normal operation of network 10a data packet DP1a is routed from access router AR1a via core router CR1a, core router CR3a, multiplexer MDa2b and multiplexer MDa2a to access router AR3a. Furthermore, there is a redundant path between access routers AR1a and AR3a from access router AR1a via multiplexer MDa1a, cross connect CC1a, cross connect CC2a, multiplexer MDa1b and via core router CR2a to access router AR3a. Both paths can be used simultaneously, for instance for load balancing. Alternatively, it is possible to use only one path in normal operation and to use the other path in the case of a failure.

Again, network 10a is a network for long distance data transmission, see distance D1a between cross connect CC2a and cross connect CC3a. Distance D1a may be longer than 100 kilometers, 500 kilometers or even longer than 700 kilometers.

By using two multiplexers at each site instead of one router CAPEX and OPEX can be saved. Router CR2a may have a higher routing capacity than router CR4x. But it may not be necessary to double the router capacity of core router CR2a compared with the routing capacity of core router CR4x.

There are different transmission methods via link L3a and link L4a. Link L3a transmits IP data packets without an overlay multiplexing scheme. Link L4a transmits IP data packets that have a multiplexing overlay, for instance time multiplexing, multiplexing in the same data container according to a multiplexing scheme, etc. It is for instance possible to multiplex the data of link L2a in a first part of a container and data of the other link to a second part of the same container. The de-multiplexing schemes are invers to the multiplexing schemes.

Core router CR1a performs IP routing and raises the data rate for link L3a compared with the data rate of the incoming links L1a, etc. Multiplexer MDa1a also raises the data rate but does not perform routing or switching.

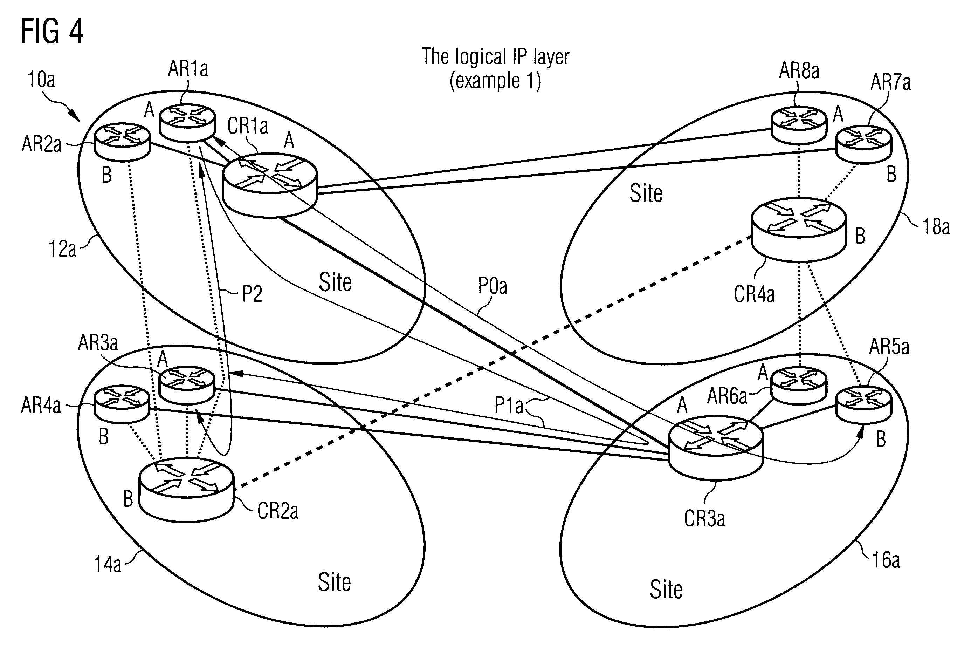

Figure 4 shows the logical IP layer view of network 10a. Again the transparent core network 20a is not shown in Figure 4. A data path P1a starts from access router AR1a, extends via core routers CR1a, CR3a and ends at access router AR3a. A data path P2a starts from access router AR1a, extends via core router CR2a and ends at access router AR3a.

Furthermore, a data path P0a is shown, that corresponds to data path P0 shown in Figure 2. Data path P0a is between access router AR1a and AR5a and extends over core router CR1a and core router CR3a.

Therefore, there are data paths P0a and P1a that comprise two or more than two core routers CR1a to CR4a. Additionally, there are data paths P2, that only comprise one core router CR2a.

Network 10a is still a network with a high redundancy..

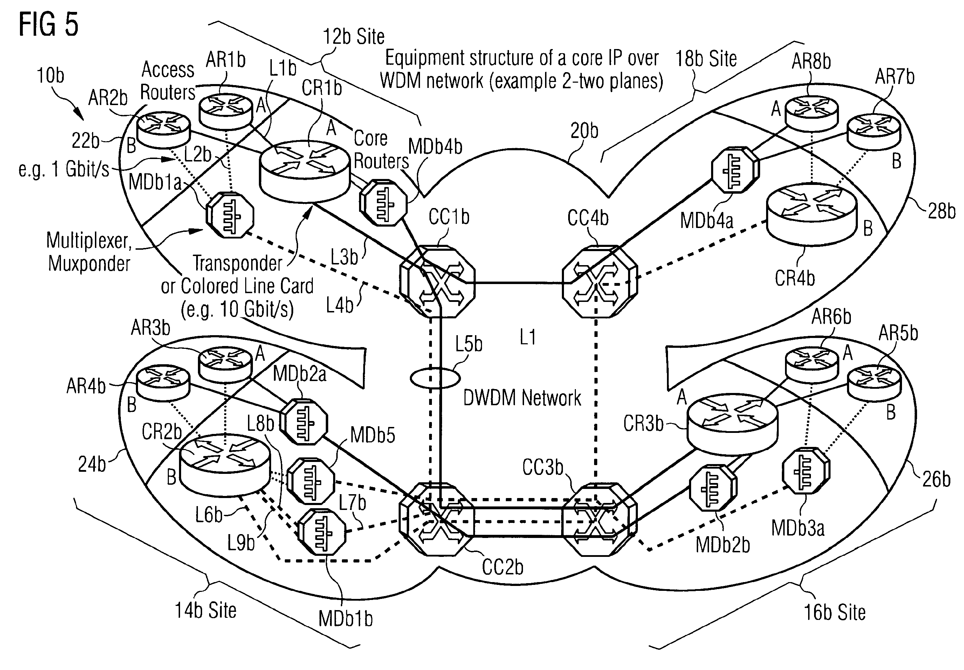

Figure 5 shows equipment structure of an IP over WDM network 10b. There are the following corresponding features in Figure 5 and Figure 3:
- sites 12b to 18b correspond to sites 12a to 18a, respectively,
- core network 20b corresponds to core network 20a,
- access router AR1b to AR8b correspond to access routers AR1a to AR8a, respectively, and
- cross connects CC1b to CC4b correspond to cross connects CC1a to CC4a, respectively,
- multiplexers MDb1a, MDb2a, MDb1b, MDb3a, MDb2b, MDb4a and MDb4b correspond to multiplexers MDa1a, MDa2a, MDa1b, MDa3a, MDa2b, MDa4a and MDa4b, respectively, i.e., there is no multiplexer that corresponds to multiplexer MDa3b. There is Instead an additional multiplexer MDb5 used at site 14b as explained in more detail below.
- links L1b to L9b correspond to links L1a to L9a, respectively. Furthermore, there are corresponding links between access routers and core routers as well as between access routers and multiplexers.

Multiplexer MDb5 is connected to core router CR2b via two links. Furthermore, multiplexer MDb5 is connected to cross connect CC2b via a further link. Multiplexer MDb5 comprises a demultiplexer, too.

There are the same data flows for network 10b compared with the data flows of network 10a with regard to network plane A. There is the following difference in the data flows with regard to network plane B. There is no data flow between a multiplexer at site 18b and a multiplexer at site 16b. There is instead a data flow between multiplexer MDb3a and the new multiplexer MDb5 via core router CC3b and CC2b in addition to the data flow between multiplexers MDb1a and MDb1b and the data flow between core routers CR2b and CR4b. Thus, site 14b is also the redundant site for site 16b with regard to network plane B.

It is also possible to use only one multiplexer MDb1b instead of the two multiplexers MDb1b and MDb5. It is possible to switch the data flows in cross connect CC2b depending on the failure scenario in this case. This is done, especially, if no load balancing is used with regard to sites 12b to 18b.

In another embodiment, there may be only one central site that comprises the multiplexers for the other sites with regard to one network plane A or B. Alternatively, it may be useful to insert redundant multiplexers in one further site to prevent a network failure if the central site fails.

Figure 6 shows a network 10c using only one network plane. There are the following corresponding features in Figure 6 and Figure 3:
- sites 12c to 18c correspond to sites 12a to 18a, respectively,
- core network 20c corresponds to core network 20a,
- access routers AR1c to AR8c correspond to access routers AR1a to AR8a, respectively,
- cross connects CC1c to CC4c correspond to cross connects CC1a to CC4a, respectively,
- multiplexers MDc1a to MDc4b correspond to multiplexers MDa1a to MDa4b, respectively,
- links L1c to L9c correspond to links L1a to L9a, respectively.

All core routers CR1c to CR4c belong to the same network plane because there is only one network plane. Thus, all multiplexers MDc1a to MDc4b also belong to the same network plane.

The following data flows are provided in network 10c:
- a data flow between core router CR1c and core router CR2c via cross connects CC1c and CC2c,
- a data flow between core router CR2c and core router CR3c via cross connects CC2c and CC3c,
- a data flow between core router CR3c and CR4c via cross connects CC3c and CC4c,
- a data flow between core router CR4c and core router CR1c via cross connects CC4c and CC1c,
- a data flow between multiplexers MDc1a and MDc1b via cross connect CC1c and CC2c,
- a data flow between multiplexers MDc2a and MDc2b via cross connects CC2c and CC3c,
- a data flow between multiplexers MDc3a and MDc3b via cross connects CC3c and CC4c,
- a data flow between multiplexers MDc4a and MDc4b via cross connects CC4c and CC1c.

Thus, it is possible to route data packets from each access router AR1c to AR8c to another access router AR1c to AR8c via two redundant paths. There is, for instance, the following path from access router AR1c to access router AR3c: from access router AR1c via core router CR1c, via cross connect CC1c, via cross connect CC2c, via core router CR2c to access router AR3c. There is the following redundant path: from access router AR1c via multiplexer MDc1a, cross connect CC1c, cross connect CC2c, multiplexer MDc1b and core router CR2c to access router AR3c.

In another embodiment, only one router is used for redundancy, for instance core router CR2c. The multiplexers MDc3b and MDc4b are not needed in this case. There may instead be a changing of signal paths in cross connects CC1c to CC3c, see reference signs 30, 32 and 34. Alternatively, it is possible to use fixed signal paths in cross connects CC1c, CC2c and CC3c and to use additional multiplexers at site 14c linked to core router CR2c.

It is also possible to use multiplexer MDc2b to have redundancy if core router CR2c is out of operation. In this case it is possible to use access routers AR3c and AR4c with the help of the multiplexers MDc2a and MDc2b.

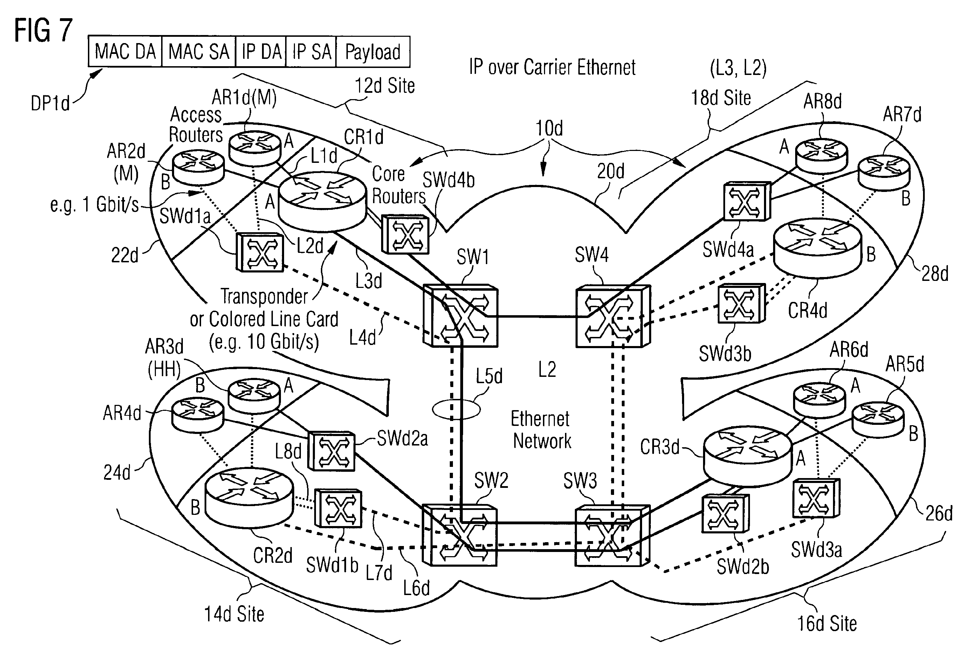

Figure 7 shows an IP over carrier Ethernet network 10d. There are the following corresponding features in Figure 7 and Figure 3:
- sites 12d to 18d correspond to sites 12a to 18a, respectively, and
- access routers AR1d to AR8d correspond to access routers AR1a to AR8a, respectively.

Core network 20d is an Ethernet network that replaces optical core network 20a. Therefore, switches SW1 to SW4 are used instead of cross connects CC1a to CC4a, respectively. Switch SW1 is for instance used to connect site 12d with the other parts of network 10d. Switches SWd1a to SWd4b replace multiplexers MDa1a to MDa4b, respectively. Switches SWd1a to SWd4b have a lower switching capacity compared with switches SW1 to SW4, for instance a switching capacity of each switch is lower than 50 percent.

Switches SWd1a to SWd4b are connected to access routers AR1d to AR8d and to core routers CR1d to CR4d at each site 12d to 18d in the same manner. Therefore, connections are described in detail mainly with regard to site 12d and site 14d. There is a link L1d between access router AR1d and core router CR1d. A link L2d connects access router AR1d to switch SWd1a. A link L3d connects core router CR1d to switch SW1. A link L4d connects switch SWd1a to switch SW1. Between switch SW1 and switch SW2 there is a link L5d. A further switch of core network 20d is between switches SW2 and SW3. Switches SW3 and SW4 are connected by a further link. A link of core network 20d connects switch SW1 and switch SW4.

A link L6d connects switch SW2 and core router CR2d. A link L7d connects switch SW2 to switch SWd1b. Switch SWd1b is connected to core router CR2d via a link L8d and a further link. Alternatively, only one link with a higher data transmission capacity may be used instead of link L8d and the further link.

Switches SWd1a to SWd4b may raise the data transmission rate, for instance from 1 Gbit/s via incoming links to 2 Gbit/s via outgoing links. Examples for switches SWb1a to SWb4b are for instance switches of type hiD 6610/6615. Switches SW1 to SW4 may be switches of type hiD6650/6670. The hiD switches are produced by Nokia Siemens Networks. Alternatively, switches of other firms may be used.

There are the following data flows in network 10d for network plane A:
- between core router CR1d and core router CR3d via switches SW1, SW2 and SW3,
- between switch SWd2a and switch SWd2b via core network 20d switches SW2 and SW3,
- between switch SWd4b and switch SWd4a via core network 20d switches SW1 and SW4.

There are the following data flows in network 10d for network plane B:
- a data flow between switches SWd1a and SWd1b via switches SW1 and SW2 of core network 20d,
- a data flow between core router CR2d and core router CR4d via switches SW2, SW3 and SW4,
- a data flow between switches SWd3a and SWd3b via switches SW3 and SW4 of core network 20d.

It is assumed that a data packet DP1d should be transmitted from access router AR1d to access router AR3d. Data packet DP1d comprises the following data fields:
- MAC destination address MAC DA, for instance, the MAC address of core router CR2d,
- a MAC source address MAC SA, for instance the MAC address of access router AR1d,
- an IP destination address IP DA, for instance the IP address of access router AR3d,
- an IP source address IP SA, for instance the IP address of access router AR1d, and
- payload data.

The MAC (Media Access Control) destination address MAC DA may be determined by using for instance the address resolution protocol ARP or another protocol. Alternatively, this address can be manually defined.

Thus, it is possible to transmit data packet DP1d from access router AR1d via switch SWd1a, switch SW1, switch SW2 and switch SWd1b to core router CR2d and then to access router AR3d. Alternatively, it is possible to transmit data packet DP1d via a redundant path from access router AR1d via core router CR1d, switch SW1, switch SW2, switch SW3, core router CR3d, switch SWd2b, switch SW3, switch SW2 and switch SWd2a to access router AR3d. In the later case, data packet DP1d contains at the beginning of the transmission the MAC address of core router CR1d in the MAC destination address data field MAC DA. Then, the routers determine successively the MAC addresses of router CR3d and of router AR3d according to a higher layer routing protocol, for instance according to ARP (Address Resolution Protocol and IP (internet Protocol).

Thus, there are again redundant paths in network 10d without using two core routers at each site 12d to 18d.

There are different transmission methods via link L3d and link L4d. Link L3d transmits IP data packets with a MAC destination address of a router. Link L4d transmits IP data with a MAC destination address of a switch.

Core router CR1d performs IP routing and raises the data rate for link L3d compared with the data rate of the incoming links L1d, etc. Core switch SWd1a also raises the data rate but does not perform routing. It is also possible not to use the switching function of switch SWd1a, i.e. it is possible to forward the incoming data packets without considering MAC addresses.

In an alternative embodiment network 10d contains only network elements of one network plane. Furthermore, it is possible to change network 10d as described above with regard to network 10b or Figure 6, i.e., to centralize redundant elements.

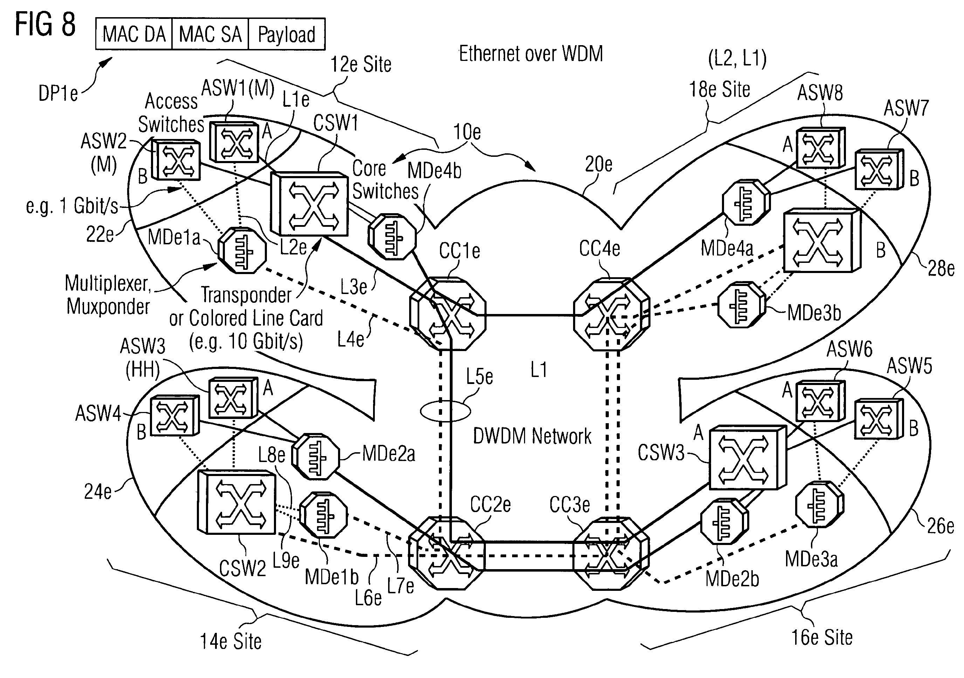

Figure 8 shows an Ethernet over WDM network 10e, i.e., a layer L2, layer L1 network. There are the following corresponding features in Figure 8 and Figure 3:
- sites 12e to 18e correspond to sites 12a to 18a, respectively,
- core network 20e corresponds to core network 20a,
- cross connects CC1e to CC4e correspond to cross connects CC1a to CC4a, respectively,
- multiplexers MDe1a to MDe4b correspond to multiplexers MDa1a to MDa4b, respectively. Multiplexers MDe1a to MDe4b operate on protocol layer L1 only. Therefore, the multiplexers MDe1a to MDe4b do not have MAC addresses.

Ethernet access switches ASW1 to ASW8 replace access routers AR1a to AR8a, respectively. Furthermore, Ethernet core switches CSW1 to CSW2 are used instead of core routers CR1a to CR4a, respectively.

There are, for instance, the following links in network 10e:
- a link L1e between access switch ASW1 and core switch CSW1,
- a link L2e between access switch ASW1 and multiplexer MDe1a,
- a link L3e between core switch CSW1 and cross connect CC1e,
- a link L4e between multiplexer MDe1a and cross connect CC1e,
- a link L5e between cross connect CC1e and cross connect CC2e,
- a link L6e between cross connect CC2e and core switch CSW2,
- a link L7e between cross connect CC2e and multiplexer MDe1b,
- a link L8e between multiplexer MDe1b and core switch CSW2, and
- a link L9e between multiplexer MDe1b and core switch CSW2.

Multiplexers MDe1a and MDe2b multiplex data of link L2e to data of link L8e and data of the other link of multiplexer MDe1a at site 12e to data of link L9e. The multiplexers MDe1a and MDe1b also comprise demultiplexers for the other data transmission direction.

Data flows for plane A of network 10e correspond to data flows for network plane A of network 10a. Data flows for network plane B of network 10e correspond likewise to data flows of network plane B of network 10a. There is for instance a data flow between core switch CSW1 and core switch CSW3 that corresponds to the data flow between core router CR1a and core router CR3a, i.e., the data flow is directed via cross connect CC1e, CC2e and CC3e.

Figure 8 shows a data packet DP1e with the following data fields:
- a MAC destination address MAC DA, that contains for instance the MAC address of access switch ASW3,
- a MAC source address MAC SA data field, that contains for instance the MAC address of access switch ASW1, and
- payload data.

There are the following paths for data packet DP1e depending on the switching performed in access switch ASW1:
- a data path starting with a transmission via link L1e, and
- a data path starting with the transmission of the data packet DP1e via link L2e.

The data path starting with link L1e is via core switch CSW1, cross connects CC1e, CC2e, CC3e to core switch CSW3. Core switch CSW3 performs switching based on the MAC destination address in data packets DP1e by directing the data packet DP1e to access switch ASW3 via multiplexer MDe2b. Multiplexer MDe2b multiplexes the incoming link to a link between multiplexer MDe2b and multiplexer MDe2a. Multiplexer MDe2a multiplexes the data packet DP1e in a bit like fashion to a link between multiplexer MDe2a and access switch ASW3. Access switch ASW3 detects that it is the destination of data packet DP1e by checking the MAC destination address MAC DA in data packet DP1e.

The path starting with link L2e is via multiplexer MDe1a. Multiplexer MDe1a multiplexes data packet DP1e in a bit like fashion to link L4e. Data packet DP1e is then transmitted only on layer 1 via the optical core network 20e, in more detail via cross connects CC1e and CC2e to multiplexer MDe1b, i.e., via links L5e and L7e. Multiplexer MDe1b multiplexes data of data packet DPe1e to link L8e in a bit like fashion by using time demultiplexing and conversion of optical signals to electrical signals. Core switch CSW2 then switches data packet DP1e to access switch ASW3 based on the MAC destination address MAC DA of data packet DP1e.

Again, there is redundancy in network 10e without using two core switches in each site 12e to 18e. Thus, it is possible to save CAPEX and OPEX. Switch ASW1 determines the next switch by using a switching protocol for Ethernet networks, for instance using the PBB-TE protocol (Provider Backbone Bridging with Traffic Engineering).

There are different transmission methods via link L3e and link L4e. Link L3e transmits MAC data packets without an overlay multiplexing scheme. Link L4a transmits MAC data packets that have a multiplexing overlay, for instance time multiplexing, multiplexing in the same data container according to a multiplexing scheme, etc. It is for instance possible to multiplex the data of link L2e in a first part of a container and data of the other link to a second part of the same container. The de-multiplexing schemes are invers to the multiplexing schemes.

Core switch CSW1 performs switching and raises the data rate for link L3e compared with the data rate of the incoming links L1e, etc. Multiplexer MDe1a also raises the data rate but does not perform routing or switching, especially no switching based on MAC addresses.

In another embodiment, network 10e comprises only switching elements of one plane, i.e., core switches CSW1 to CSW4, compare for instance Figure 6.

In another embodiment network 10e comprises more centralized redundancy elements, for instance centralized at site 14e, see Figure 5 or Figure 6.

Figure 9 shows a metro net 10f. There are the following corresponding features in Figure 9 and Figure 3:
- sites 12f to 18f correspond to sites 12a to 18a, respectively. Nevertheless, as will be described below, sites 12f to 18f are smaller sites than sites 12a to 18a.
- core network 20f corresponds to core network 20a. But, as will be described below, core network 20f is smaller than core network 20e,
- access routers AR1f to AR8f correspond to access routers AR1a to AR8a, respectively,
- core routers CR1f to CR4f correspond to core routers CR1a to CR4a, respectively,
- multiplexers MDf1a to MDf4b correspond to multiplexers MDa1a to MDa4b, respectively,
- links L1f to L9f correspond to links L1a to L9a, respectively.

In metro net 20f there are the same data flows compared with network 10a. However, the data flows are between shorter distances because metro net 20f is smaller than network 10a. Typically, all sites 12f to 18f may belong to one town or to a small geographical region. In the embodiment it is assumed that the town is Munich in Germany. It is assumed that site 12f is for a district of Munich, for instance for Perlach. Furthermore, it is assumed that site 14f is for another district of Munich, for instance for Allach.

A distance D2 between two cross connects CC2f and CC3f is typically shorter than 100 kilometers or even shorter than 50 kilometers or 20 kilometers. The transmission of data packets in metro net 20f is the same as the transmission of data packets in network 10a.

Although metro net 20f has two network planes A and B it is also possible to use only one network plane, see for instance

Figure 6. Furthermore, it is possible to have more centralized redundancy functions in metro net 10f, see for instance Figures 5 and 6.

Metro net 10f has an IP over WDM core network. Other embodiments relate to metro nets that have IP over carrier Ethernet core networks, see Figure 7, or that have Ethernet over WDM core networks, see Figure 8.

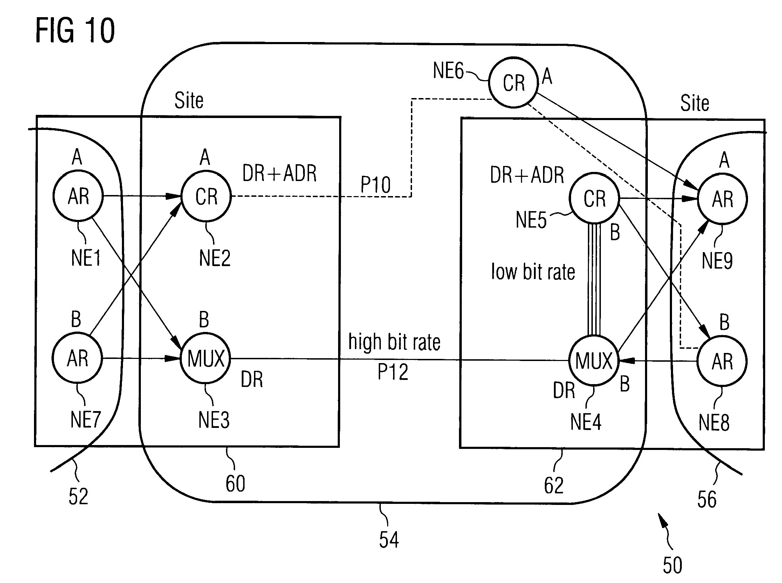

Figure 10 shows a simplified network 10, showing only one transmission direction from left to right. There may be the following corresponding features:
- a core network 54 corresponds to core network 20a, 20e
- an access network 52 corresponds to access network 22a, 22e,
- an access network 56 corresponds to access network 24a, 24e,
- a network element NE1 corresponds to access router AR1a or access switch ASW1,
- a network element NE2 corresponds to core router CR1a or core switch CSW1,
- a network element NE3 corresponds to multiplexer MDa1a or MDe1a,
- a network element NE4 corresponds to multiplexer MDa1b or MDe1b,
- a network element NE5 corresponds to core router CR2a or core switch CSW2,
- a network element NE6 corresponds to core router CR3a or to core switch CSW3,
- a network element NE7 corresponds to access router AR2a or access switch ASW2,
- a network element NE8 corresponds to access router AR4a or access switch ASW4,
- a network element NE9 corresponds to access router AR3a or access switch ASW3.

Network elements NE3 and NE4 may be replaced by switches corresponding to core switches SWd1a and SWd1b if the core network is an Ethernet.

There is a high data transmission rate in core network 54. The multiplexed data flow between network element NE3 and NE4 is comparably high, for instance higher than 100 percent, compared to each of the several de-multiplexed low bit rate data flows between network element NE4 and network element NE5. Network element NE4 and network element NE5 are usually co-located or at the same site to avoid several long parallel links, for instance longer than 100 meters.

Other modifications are possible as well. A characteristic feature of the network of one site compared to the networks of other sites is, that it is only possible to transmit data between one site to a different site by using the core network.

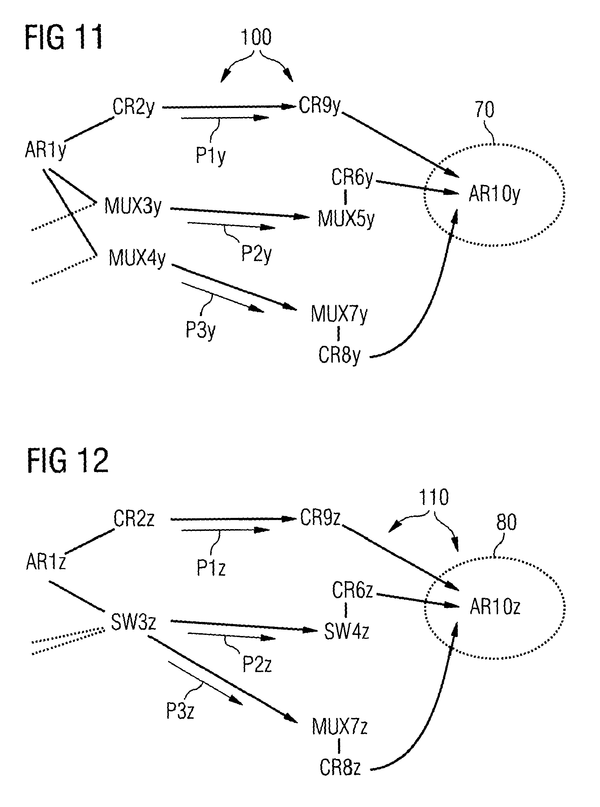

Figure 11 illustrates a network 100 with two redundant network elements CR6y, CR8y (redundancy with regard to network element CR2y) in a second data path P2y and in a third data path P3y. Network 100 comprises at a first site:
- an access router AR1y of an access network,
- a core router CR2y of a core network,
- a multiplexer MUX3y of the core network, and
- a multiplexer MUX4y of the core network.

The core network may be a DWDM network or an SDH network. There may only be one network plane or several network planes in network 100.

Access router AR1y is connected to core router CR2y, to multiplexer MUX3y and to MUX4y by three links. Multiplexers MUX3y and MUX4y may have further inputs shown by dashed lines.

Multiplexer MUX3y is connected to a multiplexer MUX5y of the core network via the core network. Multiplexer MUX4y is connected to multiplexer MUX7y of the core network via the core network.

Multiplexer MUX5y is connected to a core router CR6y of the core network. Multiplexer MUX5y and core router CR6y are located at the same site. Multiplexer MUX7y is connected to a core router CR8y of the core network. Multiplexer MUX7y and core router CR8y are located at the same site.

Multiplexer MUX5y and multiplexer MUX7y may be located at different sites with regard to each other. These sites may be different from the site of multiplexers MUX3y and MUX4y. The same is true for core routers CR6y and CR8y.

Core router CR2y is connected to a core router CR9y of the core network via the core network. Core router CR9y is located at a site that may be different from the site of core router CR2y and optionally different from the site of core router CR6y and/or the site of core router CR8y.

Network 100 further comprises an access router AR10y of a further access network. Access router AR10y is connected to core routers CR6y, CR8y and Cr9y via three links.

Thus, there are the following redundant data paths from access router AR1y to access router AR10y:
- data path P1y via core routers CR2y and CR9y,
- data path P2y via multiplexers MUX3y and MUX5y and via core router CR6y, and
- data path P3y via multiplexers MUX4y and MUX7y and via core router CR8y.
In a first embodiment, data paths P2y and P3y are only used if it is not possible to use data path P1y. If data paths P2y and P3y are used there may be load balancing with regard to this two data paths, for instance performed in access router AR1y based on IP source addresses. Alternatively, a distribution method may be used that performs well directed unbalanced distribution, for instance about 30 percent of data via data path P2y and about 70 percent of data via data path P3y.

In a second embodiment, all three data paths P1y, P2y and P3y are used simultaneously. There may be used a load balancing method for all three data paths P1y, P2y and P3y. Alternatively, a distribution method may be used that performs well directed unbalanced distribution, for instance about 20 percent of data via data path P1y, about 40 percent of data via data path P2y and about 40 percent of data via data path P3y.

There may be the following corresponding features comparing Figures 6 and 11:
- access router AR1y corresponds to access router AR1c,
- core router CR2y corresponds to core router CR1c,
- multiplexer MUX3y corresponds to multiplexer MDc1a,
- core router CR9y corresponds to core router CR2c,
- multiplexer MUX5y corresponds to multiplexer MDc1b,
- core router CR6y corresponds also to core router CR2c, and
- access router AR10y corresponds to access router AR3c.

Multiplexer MUX4y will be a further multiplexer at site 12c. Multiplexer MUX7y may be a multiplexer at site 16c. Therefore, core router CR8y corresponds to core router CR3c.

In a further embodiment, access routers AR1y, AR10y are replaced by access switches and core routers CR2y, CR9y, CR8y and CR9y are replaced by core switches, see for instance Figure 8.

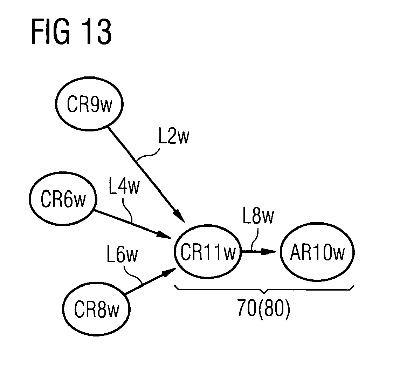

Figure 11 also shows a part 70 of network 100 comprising access router AR10y. Part 70 may be extended by more than one router, see Figure 13.

It is of course possible to use more than three data paths by using more than two multiplexers connected directly to access router AR1y.

It is also possible to replace multiplexers MUX3y and MUX4y by only one multiplexers, for instance if the multiplexer is able to output two colors or more than two colors. The input signals may be mapped to the different colors for instance based on VLAN identifiers or based on SDH container identifiers.

Figure 12 illustrates a further network 110 with one redundant network elements SW4z in a second data path P2z and in a third data path P3z. Network 110 comprises at a first site:
- an access router AR1z of an access network,
- a core router CR2z of a core network, and
- a switch SW3z of the core network.

The core network may be an Ethernet. There may only be one network plane or several network planes in network 110.

Access router AR1z is connected to core router CR2z and to switch SW3z by two links. Switch SW3z may have further inputs shown by dashed lines.

Switch SW3z is connected to a switch SW4z of the core network via the core network. Furthermore, switch SW3z is connected to a switch SW7z of the core network via the core network.

Switch SW4z is connected to a core router CR6z of the core network. Switch SW4z and core router CR6z are located at the same site. Switch SW7z is connected to a core router CR8z of the core network. Switch SW7z and core router CR8z are located at the same site.

Switches SW4z and SW7z are located at different sites with regard to each other. These sites may be different from the site of switch SW3z. The same is true for core routers CR6z and CR8z.

Core router CR2z is connected to a core router CR9z of the core network via the core network. Core router CR9z is located at a site that may be different from the site of core router CR2z and optionally different from the site of core router CR6z and/or the site of core router CR8z.

Network 110 further comprises an access router AR10z of a further access network. Access router AR10z is connected to core routers CR6z, CR8z and Cr9z via three links.

Thus, there are the following redundant data paths from access router AR1z to access router AR10z:
- data path P1z via core routers CR2z and CR9z,
- data path P2z via switches SW3z and SW4z and via core router CR6z, and
- data path P3z via switches SW3z and SW7z and via core router CR8z.

In a first embodiment, data paths P2z and P3z are only used if it is not possible to use data path P1z. If data paths P2z and P3z are used there may be load balancing with regard to this two data paths, for instance performed in core switch SW3z based on MAC addresses or incoming port numbers. Alternatively, a distribution method may be used that performs well directed unbalanced distribution, for instance about 30 percent of data via data path P2z and about 70 percent of data via data path P3z.

In a second embodiment, all three data paths P1z, P2z and P3z are used simultaneously. There may be used load balancing methods in access router AR1z and optionally also in core switch SW3z for all three data paths P1z, P2z and P3z. Alternatively, a distribution methods may be used that performs well directed unbalanced distribution, for instance about 20 percent of data via data path P1z, about 40 percent of data via data path P2z and about 40 percent of data via data path P3z.

Figure 12 also shows a part 80 of network 110 comprising access router AR10z. Part 80 may be extended by more than one router, see Figure 13.

It is of course possible to use more than three data paths by using more than two links from switch SW3z to other core switches via the core network.

Figure 13 illustrates embodiments of the network 100, 110 shown in Figure 11 or Figure 12. The following routers may be used, for instance:
- a core router CR9w that corresponds to core router CR9y or CR9z,
- a core router CR6w that corresponds to core router CR6y or CR6z,
- a core router CR8w that corresponds to core router CR8y or CR8z,
- one or more additional core routers CR11w,
- an access router ARlOw that corresponds to access router AR10y or AR10z.

There are the following links:
- a link L2w between core router CR9w and core router CR11w,
- a link L4w between core router CR6w and core router CR11w,
- a link L6w between core router CR8w and core router CR11w.

Furthermore, there is a link L8w between core router CR11w and access router AR10w. Alternatively, one link or two links of the links L2w to L6w may be directly connected from core router CR9w, CR6w or CR8w to access router AR10w.

For part 70 it is possible to use core switches instead of core routers CR9w, CR6w, CR8w and CR11w and an access switch instead of access router AR10w.

In other embodiments, sequentially connected core routers at one site are also used for the embodiments of Figure 1 to 10.

In the following there is a summary of technical teachings described with reference to Figures 1 to 13. Embodiments of the invention may be used in an arrangement to interconnect routers with one-site dual-homing of access routers.

The ideas of the invention may be applicable in the area of packet over transport networks, such as IP (Internet Protocol) / MPLS (Multi Protocol Label Switching) over WDM (Wavelength Division Multiplexing), IP over carrier Ethernet, or carrier Ethernet over WDM. In the following, IP over WDM is used to make description easier, but it is not restricted to this technology. Core routers may be interconnected by WDM-light paths.

In this type of networks each access router may be attached to two core routers by dual homing. The case of intra-site dual homing is assumed. Other scenarios are possible, as well.

The core router shall not be a single point of failure (SPoF) for the attachment of an access router to the core network. These routers may be even separated by planes (plane A and B) .

One possibility to achieve this is when each site deploys two core routers at the expense of high OPEX (OPerational EXpenditures) or CAPEX (CAPital Expenditures) since:
- two routers (i.e. complex network elements) need to be administrated per site,
- space for two routers is needed per site,
- there is high power consumption for two routers,
- compared with, e.g., single-router per-site solutions, doubled router network elements are used that double the likelihood of router based failures (switching matrix, back plane, main controller, etc.).

Additionally, the separation of traffic onto two routers does not enable as much resource efficiency from statistical multiplexing as presenting the traffic to just one router.

One solution may be to replace one of the routers at a site by a multiplexing unit (e.g., muxponder (multiplexer / transponder), multiplexer) or a switch that may be connected in a special way to a router at a different site and that may be connected by one of the dual homing attachments to each access router.

Figure 1 shows a comparative equipment structure of an IP over WDM core network 10. Access routers AR1 to AR8 are attached to two core routers CR1x to CR8x that belong to either plane A (solid lines) or plane B (dashed lines). For simplicity the Figures 1 to 9 only show two access routers AR1 to AR8 per site, however, more access routers AR1 to AR8 are typically deployed in real networks 10.

Figure 2 shows the logical IP layer of network 10. The following rule applies:
Each access router AR1 to AR8 of site i is attached to core routers (A/B) of site i, where i is a natural number in the range of 2 to infinity, typically smaller than 1000.

Figure 2 also shows the logical IP layer with an example path P0 between access router AR1 and access router AR5. Every s, t-path has the following structure:
Access router at s, core router at s, (core router at n, etc.), core router at t, access router at t.

This means for path P0: access router AR1, core router CR1x, core router CR8x, core router CR6x, access router AR5.

Figure 3 shows the equipment structure according to an embodiment of the invention in a network 10a. Figure 4 shows the logical IP layer of network 10a. The following simple rules apply for plane A:
Each access router (e.g. AR1a) of a site i associated to plane A and linked to a core router of plane A at its site (i.e. site i) is linked to a core router of plane B at the next site (i.e. site i + 1 or 1 if at end).
Each access router (e.g. AR3a) of a site i associated to plane A and not linked to a core router of plane A at its site (i.e. site i) is linked to a core router of plane B at its site and to a core router of plane A at the next side (i.e. site i + 1 or 1 if at end).

### Analogously for plane B:

Each access router (e.g. AR4a) of a site i associated to plane B and linked to a core router of plane B at its site (i.e. site i) is linked to a core router of plane A at the next site (i.e. site i + 1 or 1 if at end).

Each access router (e.g. AR2a) of a site i associated to plane B and not linked to a core router of plane B at its site (i.e. site i) is linked to a core router of plane A at its site and to a core router of plane B at the next side (i.e. site i + 1 or 1 if at end).

Figure 4 also shows the logical IP layer with an example path P0a according to an embodiment of the invention. Full connectivity is provided. Every s, t-path has one of the following structures:
a) Access router at s, core router at s, (core router at n, etc.), access router at t, e.g., for path P1a access router AR1a, core router CR1a, core router CR3a and access router AR3a.
Or b) :
   Access router at s, core router at s + 1, (core router at n, etc.), access router at t, e.g., for Path P2a access router AR1a, core router CR2a and access router AR3a.
Or c) :
   Access router at s, core router at s, (core router at n, etc.), core router at t, access router at t, e.g., see path P0a.

Thus, unlike the comparative structure above, inter-site traffic is possible with passing only one core router.

### Advantages:

- Only one router needs to be administrated at each site.
- Space is needed at each site only for one (yet larger) router and few (typical small) multiplexing units or switching units. For example, shelves can be saved.
- Power consumption is lower because only one router is required per site and multiplexer or switch consumes much less power than a router.
- As multiplexing elements are more reliable compared to routers due to the low complexity fewer additional element failures are added to the single router-per-site solution. The same is true for switching elements.
- Resource efficiency from statistical multiplexing can be obtained, since one router is on average responsible for more traffic than in the separated case with two routers.
- It is possible to keep the concept of two planes or more than two planes.

Furthermore, there is an advantage of higher geographical redundancy. Thus, it is possible to arrange the redundant elements in different geographical areas. Even if one geographical area is damaged, for instance by an earthquake or by a fire, the other geographical area is not influenced and the redundant network element can be used in this geographical area.

It is also possible to divide the redundant data flows to more than one neighboring location, i.e., to more than one site. Resource sharing is also possible in an efficient way. The reliability of the system becomes very high.

### List of reference signs

AR access router
CR core router
CC cross connect
10 network
12 to 18 site
20 core network
22 to 28 access network
MD multiplexer
SW switch
ASW access switch
CSW core switch
P0 to P2 path
DP data packet
IP Internet Protocol
SA source address
DA destination address
30 to 34 change of data flow
D distance
A, B network plane
50 network
52, 56 access network
54 core network
NE1 to NE8 network element
60, 62 site
DR data rate
ADR address
70, 80 part of network
100 network
AR1y access router
CR2y core router
MUX3y to MUX5y multiplexer
MUX7y multiplexer
CR6y, CR8y and CR9y core router
AR10y access router
P1y to P3y data path
110 network
AR1z access router
CR2z core router
SW3z, SW4z, SW7z switch
CR6z, CR8z and CR9z core router
AR10z access router
P1z to P3z data path
L2w to L8w link

## Claims

1. Method for providing redundancy in a data transmission network (10a, 10d, 10e), comprising:
providing a first data transmission path (P1) from a first network element (AR1a) of a first network (22a) via a second network (20a),
providing a second data transmission path (P2) from the first network element (AR1a) via the second network (20a),
using in the first data transmission path (P1) and in the second network (20a), a second network element (CR1a) that processes data packets using a first type of identifiers of data packets,
using in the second data transmission path (P2) and in the second network (20a), a third network element (MDa1a) that does not use identifiers of data packets for processing or that uses a second type of identifiers of data packets for processing whereby the second type is different from the first type.

2. Method according to claim 1, wherein:
a) the first network element comprises a router (AR1a), the second network element comprises a router (CR1a) and the third network element comprises a multiplexer (MDa1a), or
b) the first network element comprises a router (AR1d), the second network element comprises a router (CR1a) and the third network element comprises a switch (SWd1a), or
c) the first network element comprises a switch (ASW1), the second network element comprises a switch (CSW1) and the third network element comprises a multiplexer (MDe1a).

3. Method according to one of the preceding claims, wherein the first network element (AR1a), the second network element (CR1a) and the third network element (MDa1a) are located at a first site (12a).

4. Method according to one of the preceding claims, wherein in the second data path (P2) and in the second network (20a, 54), a forth network element (MDa1b, NE4) is used that is linked to the third network element (MDa1a, NE3) and that does not use identifiers of data packets for processing of data packets or uses the second identifiers of data packets for processing of data packets, and
in the second data path (P2, P12) and in the second network, a fifth network element (CR2a, NE5) is used that is linked to the forth network element (MD1ab, NE4) and that forwards data based on the first method.

5. Method according to claims 3 and 4, wherein the forth network element (CR2a, NE4) and the fifth network element (NE5) are located at a second site (14a, 62) that is different from the first site (12a).

6. Method according to one of the preceding claims, wherein in the first data path (P1, P10) and in the second network, a sixth network element (CR3a, NE6) is used that is linked to the second network element (CR1a, NE2) and that processes data packets based on the first method.

7. Method according to claims 5 and 6, wherein the sixth network element is located at the second site or at a third site (16a) that is different from the first site (12a, 60) and from the second site (14a, 62).

8. Method according to one of the preceding claims, wherein: a first link (L1a) is used between the first network element (AR1a) and the second network element (CR1a),
a second link (L2a) is used between the first network element (AR1a) and the third network element (CR1a).

9. Method according to claim 8, wherein the first link (L1a) and the second link (L2a) are direct links.

10. Method according to one of the preceding claims, wherein in the first network (22a, 52) a seventh network element (AR2a, NE7) is used that is linked to the second network element (CR1a, NE2) and to the third network element (MDd1a, NE3) .

11. Method according to claim 7, wherein in the first path (P1) and in the second path (P2) and in a third network (22a, 62) an eighth network element (AR4a, NE8) is used that is linked to the fifth network element (CR2a, NE5) and to the sixth network element (CR3a, NE6).

12. Method according to claim 11, wherein in the third network (22a, 62) a ninth network element (AR3a, NE9) is used that is linked to the fifth network element (CR2a, NE5) and to the sixth network element (CR3a, NE6).

13. Method according to one of the preceding claims, wherein the second network element (CR1a) is part of a first network plane (A), and
the third network element (MDa1a) is part of a second network plane (B),
the first network plane (A) and the second network plane (B) forming redundant planes with regard to each other.

14. Method according to one of the preceding claims, wherein the first data transmission path (P1) and the second data transmission path (P2) are redundant data transmission paths with regard to each other.

15. Method according to one of the preceding claims, wherein the first data transmission path (P1) and the second data transmission path (P2) have the first network element at its beginning and a common network element at its ends or they have a common network element at its beginning and the first network element at its ends.

16. Method according to one of the preceding claims, wherein a third data transmission path (P3y) is used from the first network element (AR1y) via the second network,
the third data transmission path (P3y) being a redundant data path with regard to at least one or both of the first data transmission path (P1y) and the second data transmission path (P2y) .

17. Method according to claim 16, wherein a further network element (MUX4y) is used in the third data transmission path (P3y) and in the second network,
the further network element (MUX4y) does not use identifiers of data packets for processing or uses the second type of identifiers of data packets for processing.

18. Method according to claim 16, wherein the third network element (SW3z) is also arranged in the third data transmission path (P3z).

19. Method according to claim 17 or 18, wherein the second data transmission path (P2y, P2z) and the third data transmission path (P3y, P3z) are used simultaneously with regard to each other.

20. Method according to claims 19, wherein load balancing is used with regard to the second data transmission path (P2y, P2z) and the third data transmission path (P3y, P3z),
or a data distribution method is used that results in unbalanced load or in a well specified unbalanced load via the second data transmission path (P2y, P2z) compared with the third data transmission path (P3y, P3z).

21. Method according to claim 17 or 18, wherein the first data transmission path (P1y, P1z), the second data transmission path (P2y, P2z) and the third data transmission path (P3y, P3z) are used simultaneously with regard to each other.

22. Method according to claims 21, wherein load balancing is used with regard to the first data transmission path (P1y, P1z), the second data transmission path (P2y, P2z) and the third data transmission path (P3y, P3z),
or a data distribution method is used that results in unbalanced load or in a well specified unbalanced load via the first data transmission path (P1y, P1z), the second data transmission path (P2y, P2z) and the third data transmission path (P3y, P3z).

23. Method according to one of the preceding claims, wherein at least one redundant network element (CR2a, CR6y, CR8y) is used for the second network element (CR1a, CR2y),
the at least one redundant network element (CR1a, CR2y) using also the first type of identifier for processing data packets and is located at a different site compared with the site of the second network element (CR1a, CR2y).

24. Method according to one of the claims 1 to 22, wherein at least two redundant network elements (CR6y, CR8y) are used for the second network element (CR2y),
both redundant network elements (CR6y, CR8y) using also the first type of identifier for processing data packets.

25. Method according to claim 24, wherein both redundant network elements (CR6y, CR8y) are located at a different site compared with the site of the second network element (CR1a, CR2y) .

26. Method according to one of the claims 1 to 12, wherein there are a third data transmission path and a forth data transmission path that is redundant with regard to the third data transmission path,
using in the third data transmission path and in the second network (20a) a tenth network element,
using in the forth data transmission path in the second network (20a) an eleventh network element,
the tenth network element and the eleventh network element both forwarding data using the same identifier type of data packets.

27. Data transmission network (10a), comprising:
a first network element (AR1a) of a first network (22a), in a second network (20a), a second network element (CR1a) linked to the first network element (AR1a) via a first link (L1a),
in the second network (20a), a third network element (MDa1a) linked to the first network element (AR1a) via a second link (L2a) ,
the second network element (CR1a) comprises a first transmitting unit that processes data packets based on a first method using a first type of identifiers of data packets,
the third network element (MDa1a) comprises a second transmitting unit that does not use identifiers of data packets for processing of data packets or that uses identifiers of a second type for processing of data packets whereby the second type is different from the first type.

28. Network (10a) according to claim 27, wherein there is at least one network element used in a method according to one of the claims 1 to 26.
